# EUROPEAN PATENT SPECIFICATION

(11) **EP 0 929 406 B1**
(45) Date of publication and mention of the grant of the patent: **12.12.2001**
(21) Application number: 96936176.5
(22) Date of filing: 04.10.1996
(51) Int. Cl.: B60C 9/18, B60C 9/20

(54) **RUBBER/FABRIC WEAR STRIPS FOR AIRCRAFT TIRES**
ABRIEBSTREIFEN AUS GUMMI/GEWEBE FÜR FLUGZEUGREIFEN
BANDELETTES D'USURE EN CAOUTCHOUC/TISSU POUR PNEUS D'AVION

(43) Date of publication of application: 21.07.1999
(73) Proprietor: THE GOODYEAR TIRE & RUBBER COMPANY, Akron, Ohio 44316-0001 (US)
(72) Inventor: SLIVKA, John, Joseph, Danville, VA 24541 (US)
(74) Representative: Leitz, Paul
(86) International application number: US9615891
(87) International publication number: WO9814337

(56) References cited:
- EP-A- 0 280 674
- DE-A- 2 046 262
- DE-A- 4 032 166
- FR-A- 2 358 998
- US-A- 5 111 864
- PATENT ABSTRACTS OF JAPAN vol. 011, no. 025 (M-556), 23 January 1987 & JP 61 196805 A (BRIDGESTONE CORP), 1 September 1986,

## Description

### Technical Field

This invention pertains to the art of pneumatic tires, and more specifically to tires of the type having a breaker assembly comprising layers of cord fabric positioned beneath the tread. The breaker assembly includes wear strips to reduce wear in the crown region of the tire.

### Background Art

Pneumatic tires which are used in aircraft landing applications tend to wear along the centerline faster than the shoulder regions. When the tire wears through the breaker assembly, it must be removed and replaced.

In the art, various breaker assembly constructions have been set forth for use in pneumatic tires in efforts to enhance certain features of the tire. For example, US-A-3 717 191 to Harrington et al. discloses a strip of rubber compound interposed between adjacent layers of cord fabric in a breaker assembly in order to change the stiffness of the tread between the crown and shoulder regions.

The arrangement of the bias angle of cords within a breaker ply with respect to the bias angle of cords within an additional breaker ply, as disclosed in US-A-3 131 744 to Boussu et al., seeks to improve the roadability and riding comfort of a pneumatic tire.

In US-A-3 762 458 to Yoshida et al., a pneumatic tire having a breaker layer of rubber coated glass cords sandwiched between two layers of short cut fiber reinforced rubber is disclosed. The pneumatic tire purportedly has improved abrasion resistance, cornering power and plunger resistance.

EP-A-280 674, corresponding to the preamble of claim 1, 8 and 10, discloses a tire having a rubber layer between the radialy inner belt plies. At least one of the radially inner belt plies is split into two portions.

### Disclosure of Invention

The present invention is directed to a pneumatic tire having an improved breaker assembly in order to resist wear in the crown region of the tire. The tire is particularly useful in aircraft applications in order to increase the number of landings the tire can achieve before replacement is necessary.

Generally, the pneumatic tire 10 includes a breaker assembly 20, 20A, 20B disposed between the tread 14 and the carcass 18 in the crown region of the tire. The breaker assembly 20, 20A, 20B includes wear strips. The construction of the wear strips and placement in the breaker assembly are set forth in the following preferred embodiments.

In one embodiment, the breaker assembly 20 comprises a first circumferentially extending breaker layer 24 which includes a central portion 26 located between a pair of extensions 30. Preferably, the central portion 26 comprises rubber material and the extensions 30 comprise cord fabric. The central portion 26 acts as a wear strip to improve performance of the tire in aircraft landing applications.

A second circumferentially extending breaker layer 34 is positioned radially inwardly of the first layer 24. In a preferred embodiment, the second layer 34 is formed of cord fabric.

A third circumferentially extending breaker layer 40, located radially inwardly of the second layer 34, also includes a central portion 44 between a pair of extensions 48. The construction of the third layer 40 is similar to that of the first layer 24 in that the central portion 44 comprises rubber while the extensions 48 comprise cord fabric.

A fourth circumferentially extending breaker layer 52 is located radially inwardly of the third layer 40. The construction of the fourth layer 52 is similar to that of the second layer 34 and comprises cord fabric.

Another embodiment of the present invention includes at least three, and preferably four, circumferentially extending breaker layers 56, 60, 64, 68 comprising cord fabric. Interposed between adjacent layers in the central region of the breaker assembly 20A are narrow, relatively thin strips 72 of rubber.

In yet another embodiment, first, second, and third circumferentially extending breaker layers 80, 84, 88 comprise cord fabric. Interposed between adjacent layers in the central region of the breaker assembly 20B are narrow wear strips 92 of cord fabric.

### Definitions

For ease of understanding this disclosure the following terms are disclosed:
"Axial" and "axially" means the lines or directions that are parallel to the axis of rotation of the tire.
"Circumferential" means lines or directions extending along the perimeter of the surface of the annular tire parallel to the equatorial plane EP and perpendicular to the axial direction.
"Equatorial Plane (EP)" means the plane perpendicular to the tire's axis of rotation and passing through the center of its tread.
"Inner" means toward the inside of the tire and "outer" means toward its exterior.
"Radial" and "radially" mean directions radially toward or away from the axis of rotation of the tire.
"Rubber" means both natural and synthetic rubber compounds or a combination thereof.

### Brief Description of Drawings

Figure 1 is a sectional view of one embodiment of the present invention.
Figure 2 is a sectional view of another embodiment of the present invention.
Figure 3 is a sectional view of yet another embodiment of the present invention.

### Detailed Description of the Invention

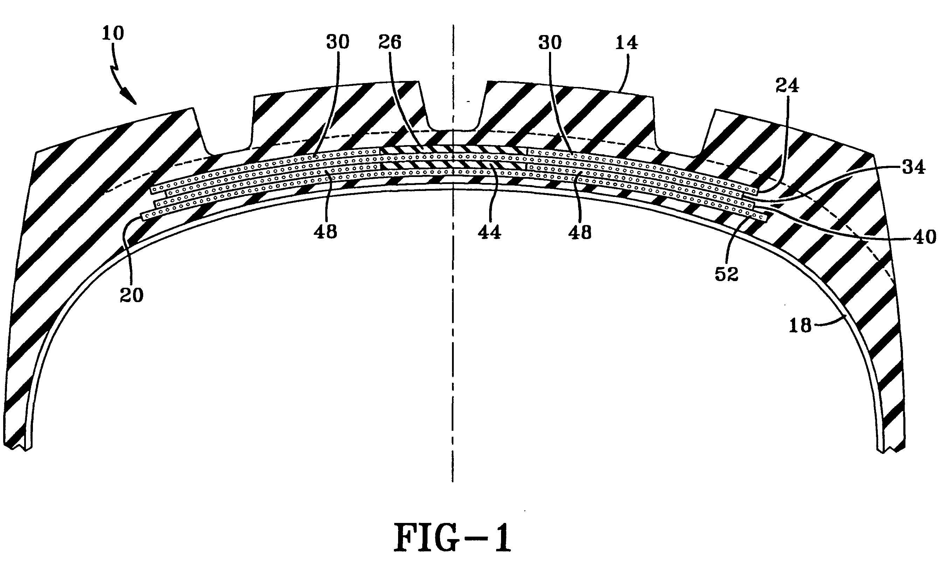

Figure 1 shows a partial sectional view of a pneumatic tire 10 of the present invention. Disposed between the tread 14 and the carcass 18 is a breaker assembly 20. The present invention is particularly directed to the construction of breaker assembly 20.

In the embodiment shown in Figure 1, the breaker assembly 20 comprises a first circumferentially extending breaker layer 24 which includes a central portion 26 located between a pair of extensions 30. Preferably, the central portion 26 comprises rubber material and the extensions 30 comprise cord fabric.

In a preferred embodiment, the central portion 26 has a transverse width which is between **10%-50%** of the transverse width of the entire first layer 24. Also, in a preferred embodiment, the thickness of the first layer 24 is essentially constant across its entire width. In other words, the thickness of the central portion 26 is essentially equivalent to the thickness of the cord fabric extensions 30. The central portion 26 acts as a wear strip to improve performance of the tire in aircraft landing applications.

A second circumferentially extending breaker layer 34 is positioned radially inwardly of the first layer 24. In a preferred embodiment, the second layer 34 is formed of cord fabric. As shown in Figure 1, in a preferred embodiment, the transverse width of the second layer 34 is generally less than the transverse width of the first layer 24.

A third circumferentially extending breaker layer 40, located radially inwardly of the second layer 34, also includes a central portion 44 between a pair of extensions 48. The construction of the third layer 40 is similar to the first layer 24 in that the central portion 44 comprises rubber while the extensions 48 comprise cord fabric. In one embodiment of the invention, the central portions 26, 44 are essentially equal in transverse width. However, differences in width might be preferred in some applications and fall within the scope of the present invention. Likewise, the transverse width of the entire third layer 40 may differ from the transverse width of the entire first layer 24 according to the application of the invention.

A fourth circumferentially extending breaker layer 52 is located radially inwardly of the third layer 40. The construction of the fourth layer 52 is similar to that of the second layer 34 and comprises cord fabric.

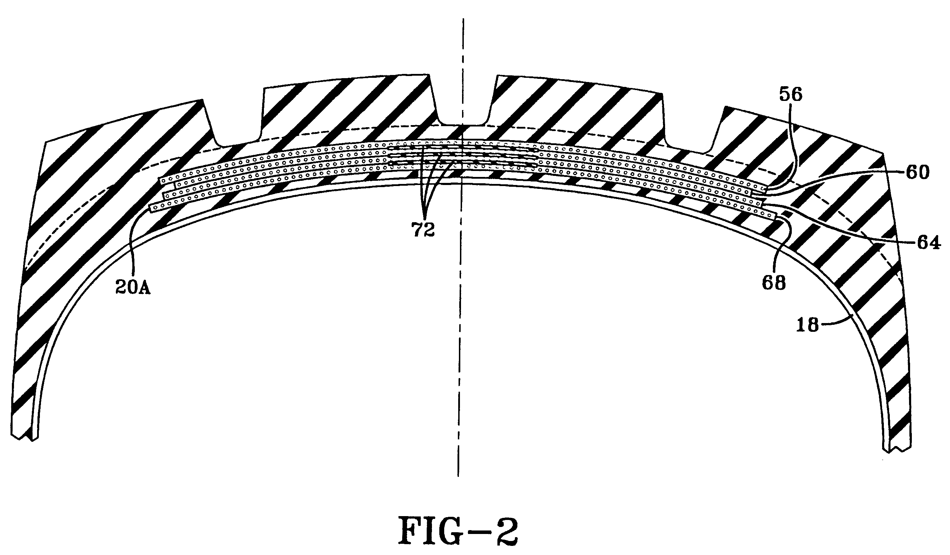

Another embodiment of the present invention, as shown in Figure 2, includes at least three, and preferably four, circumferentially extending breaker layers 56, 60, 64, 68 comprising cord fabric. Interposed between adjacent layers in the central region of the breaker assembly 20A are narrow, relatively thin strips 72 of rubber. In a preferred embodiment, the thickness of the rubber strips 72 is between 0.33 and 0.50 times the thickness of one of the cord fabric layers. The transverse widths of each of the strips 72 is preferably between **10%-50%** of one of the cord fabric layers. In this embodiment, the rubber strips 72 act as wear strips to improve the tire's performance.

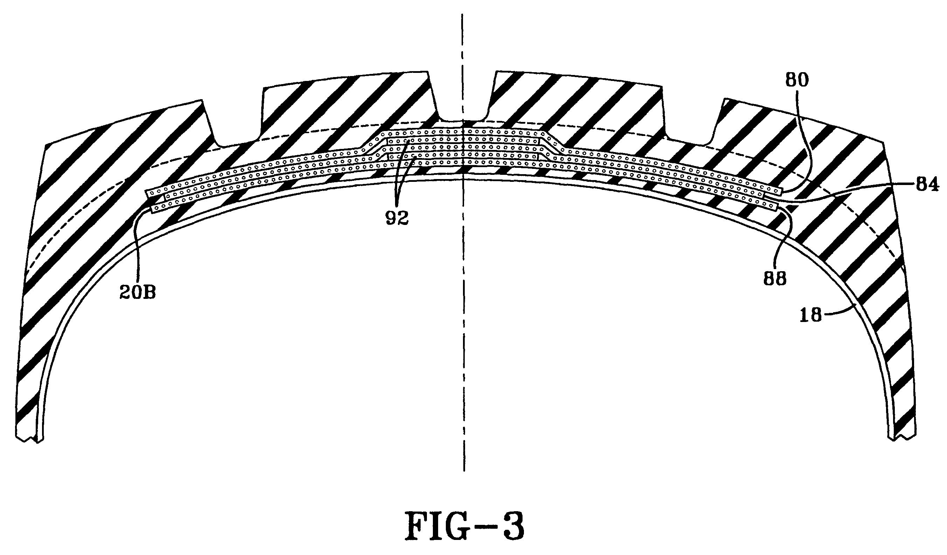

In the embodiment shown in Figure 3, first, second, and third circumferentially extending breaker layers 80, 84, 88 comprise cord fabric. Interposed between adjacent layers in the central region of the breaker assembly 20B are narrow wear strips 92 of cord fabric. The transverse widths of the fabric strips 92 are between **10%-50%** of the transverse width of one of the breaker layers. The thickness of each of the fabric strips 92 is essentially the same as the thickness of one of the breaker layers.

## Claims

1. A pneumatic tire (10) for vehicle wheels having a pair of beads, a carcass extending from one bead to the other through a crown, a tread (14) covering the outer side of the carcass, and a breaker assembly (20) arranged in the crown and on the outside of the carcass and on the inside of the tread, the breaker assembly comprising at least first, second, and third circumferentially extending layers wherein the first breaker layer (24) is radially outward of the second layer (34) and the second layer is radially outward of the third layer (40) and wherein one of the breaker layers includes a rubber central portion between two lateral portions comprising cord fabric, the pneumatic tire being **characterized by** the first breaker layer including a rubber central portion (26); and two lateral portions (30) comprising cord fabric wherein the central portion and the lateral portions have a uniform thickness.

2. The pneumatic tire (10) of claim 1 further **characterized by** the second layer (34) being cord fabric; and the third breaker layer (40) including a rubber central portion (44) and two lateral portions comprising cord fabric.

3. The pneumatic tire (10) of claim 2 further **characterized by** the central portion (26) of the first layer (24) and the central portion (44) of the third layer (40) being essentially equal in transverse width.

4. The pneumatic tire (10) of claim 2 further **characterized by** the second layer (34) having a transverse width less than a transverse width of the first layer (24).

5. The pneumatic tire (10) of claim 2 further **characterized by** the central portion (26) of the first layer (24) having a transverse width between 10% and 50% of a transverse width of the first layer.

6. The pneumatic tire (10) of claim 2 wherein the central portions of the first and third layers are essentially equal in transverse width.

7. The pneumatic tire of claim 2 further **characterized by** a fourth circumferentially layer (52) extending radially inward of the third layer (40) and comprising cord fabric.

8. A pneumatic tire (10) for vehicle wheels having a pair of beads, a carcass (18) extending from one bead to the other through a crown, a tread (14) covering the outer side of the carcass, and a breaker assembly (20A) arranged in the crown and on the outside of the carcass and on the inside of the tread, the breaker assembly comprising at least first, second, and third circumferentially extending layers, wherein the first breaker layer (56) is radially outward of the second layer and the second layer (60) is radially outward of the third layer (64), the pneumatic tire being **characterized by** a first circumferentially extending strip (72) of rubber compound interposed between the first and second breaker layers, the first strip having a transverse width between 10% and 50% of a transverse width of one of said layers and a thickness between 33% and 50% of a thickness of one of said layers; and a second circumferentially extending strip (72) of rubber compound interposed between the second and third breaker layers, the second strip having a transverse width between 10% and 50% of said transverse width of said one of said layers and a thickness between 33% and 50% of said thickness of said one of said layers, the first and second strips being positioned in a center region of the breaker assembly.

9. The pneumatic tire of claim 8 wherein the transverse widths of the first and second strips are essentially equal.

10. A pneumatic tire (10) for vehicle wheels having a pair of beads, a carcass (18) extending from one bead to the other through a crown, a tread (14) covering the outer side of the carcass, and a breaker assembly (20B) arranged in the crown and on the outside of the carcass and on the inside of the tread, the breaker assembly comprising at least first, second, and third circumferentially extending layers wherein the first breaker layer (30) is radially outward of the second layer (84) and the second layer is radially outward of the third layer (88), the pneumatic tire being **characterized by** a first circumferentially extending strip (92) of cord fabric interposed between the first and second breaker layers, the first strip having a transverse width between 10% and 50% of a transverse width of one of said layers and a thickness essentially the same as a thickness of one of said layers; and a second circumferentially extending strip (92) of cord fabric interposed between the second and third breaker layers, the second strip having a transverse width between 10% and 50% of said transverse width of said one of said layers and a thickness essentially the same as said thickness of said one of said layers, the first and second strips being positioned in a center region of the breaker assembly.

11. The pneumatic tire of claim 10 wherein the transverse widths of the first and second strips are essentially equal.

## Patentansprüche

1. Luftreifen (10) für Fahrzeugräder mit zwei Wülsten, einer Karkasse, die sich von einem Wulst zum anderen durch eine Krone hindurch erstreckt, einem Laufstreifen (14), der die Außenseite der Karkasse bedeckt, und einer Breakeranordnung (20), die in der Krone und an der Außenseite der Karkasse und an der Innenseite des Laufstreifens angeordnet ist, wobei die Breakeranordnung zumindest eine erste, eine zweite und eine dritte sich in Umfangsrichtung erstreckende Schicht aufweist, wobei die erste Breakerschicht (24) radial außen in bezug auf die zweite Schicht (34) liegt und die zweite Schicht radial außen in bezug auf die dritte Schicht (40) liegt, und wobei eine der Breakerschichten einen zentralen Gummiabschnitt zwischen zwei seitlichen, Kordgewebe umfassenden Abschnitten aufweist, wobei der Luftreifen **dadurch gekennzeichnet ist, daß** die erste Breakerschicht einen zentralen Gummiabschnitt (26) und zwei seitliche, Kordgewebe umfassende Abschnitte (30) aufweist, wobei der zentrale Abschnitt und die seitlichen Abschnitte eine gleichmäßige Dikke aufweisen.

2. Luftreifen (10) nach Anspruch 1, ferner **dadurch gekennzeichnet, daß** die zweite Schicht (34) Kordgewebe ist; und daß die dritte Breakerschicht (40) einen zentralen Gummiabschnitt (40) und zwei seitliche, Kordgewebe umfassende Abschnitte aufweist.

3. Luftreifen (10) nach Anspruch 2, ferner **dadurch gekennzeichnet, daß** der zentrale Abschnitt (26) der ersten Schicht (24) und der zentrale Abschnitt (44) der dritten Schicht (40) im wesentlichen die gleiche Querbreite aufweisen.

4. Luftreifen (10) nach Anspruch 2, ferner **dadurch gekennzeichnet, daß** die zweite Schicht (34) eine Querbreite aufweist, die kleiner als eine Querbreite der ersten Schicht (24) ist.

5. Luftreifen (10) nach Anspruch 2, ferner **dadurch gekennzeichnet, daß** der zentrale Abschnitt (26) der ersten Schicht (24) eine Querbreite zwischen 10% und 50% einer Querbreite der ersten Schicht aufweist.

6. Luftreifen (10) nach Anspruch 2, ferner **dadurch gekennzeichnet, daß** die zentralen Abschnitte der ersten und der dritten Schicht im wesentlichen die gleiche Querbreite aufweisen.

7. Luftreifen nach Anspruch 2, ferner **dadurch gekennzeichnet, daß** eine vierte Umfangsschicht (52) sich radial innen in bezug auf die dritte Schicht (40) erstreckt und Kordgewebe umfaßt.

8. Luftreifen (10) für Fahrzeugräder mit zwei Wülsten, einer Karkasse (18), die sich von einem Wulst zum anderen durch eine Krone hindurch erstreckt, einem Laufstreifen (14), der die Außenseite der Karkasse bedeckt, und einer Breakeranordnung (20A), die in der Krone und an der Außenseite der Karkasse und an der Innenseite des Laufstreifens angeordnet ist, wobei die Breakeranordnung zumindest eine erste, eine zweite und eine dritte sich in Umfangsrichtung erstreckende Schicht aufweist, wobei die erste Breakerschicht (56) radial außen in bezug auf die zweite Schicht (60) liegt und die zweite Schicht (60) radial außen in bezug auf die dritte Schicht (64) liegt, wobei der Luftreifen **gekennzeichnet ist durch** einen ersten sich in Umfangsrichtung erstreckenden Streifen (72) aus einer Gummimischung, der zwischen der ersten und der zweiten Breakerschicht angeordnet ist, wobei der erste Streifen eine Querbreite zwischen 10% und 50% einer Querbreite von einer der Schichten und eine Dicke zwischen 33% und 50% einer Dicke von einer der Schichten aufweist; und einen zweiten sich in Umfangsrichtung erstreckenden Streifen (72) aus einer Gummimischung, der zwischen der zweiten und der dritten Breakerschicht angeordnet ist, wobei der zweite Streifen eine Querbreite zwischen 10% und 50% der Querbreite von der einen der Schichten und eine Dicke zwischen 33% und 50% der Dicke von der einen der Schichten aufweist, wobei der erste und der zweite Streifen in einem mittleren Bereich der Breakeranordnung angeordnet sind.

9. Luftreifen nach Anspruch 8, wobei die Querbreiten des ersten und des zweiten Streifens im wesentlichen gleich sind.

10. Luftreifen (10) für Fahrzeugräder mit zwei Wülsten, einer Karkasse (18), die sich von einem Wulst zum anderen durch eine Krone hindurch erstreckt, einem Laufstreifen (14), der die Außenseite der Karkasse bedeckt, und einer Breakeranordnung (20B), die in der Krone und an der Außenseite der Karkasse und an der Innenseite des Laufstreifens angeordnet ist, wobei die Breakeranordnung zumindest eine erste, eine zweite und eine dritte sich in Umfangsrichtung erstreckende Schicht aufweist, wobei die erste Breakerschicht (30) radial außen in bezug auf die zweite Schicht (84) liegt und die zweite Schicht radial außen in bezug auf die dritte Schicht (88) liegt, wobei der Luftreifen **gekennzeichnet ist durch** einen ersten sich in Umfangsrichtung erstreckenden Streifen (92) aus Kordgewebe, der zwischen der ersten und der zweiten Breakerschicht angeordnet ist, wobei der erste Streifen eine Querbreite zwischen 10% und 50% einer Querbreite von einer der Schichten aufweist und eine Dicke, die wesentlichen gleich ist wie eine Dicke von einer der Schichten; und einen zweiten sich in Umfangsrichtung erstreckenden Streifen (92) aus Kordgewebe, der zwischen der zweiten und der dritten Breakerschicht angeordnet ist, wobei der zweite Streifen eine Querbreite zwischen 10% und 50% der Querbreite von der einen der Schichten aufweist und eine Dicke, die wesentlichen gleich ist wie die Dicke der einen der Schichten, wobei der erste und der zweite Streifen in einem mittleren Bereich der Breakeranordnung angeordnet sind.

11. Luftreifen nach Anspruch 10, wobei die Querbreiten des ersten und des zweiten Streifens im wesentlichen gleich sind.

## Revendications

1. Bandage pneumatique (10) pour des roues de véhicules, possédant une paire de talons, une carcasse s'étendant d'un talon à l'autre en passant par une couronne, une bande de roulement (14) recouvrant le côté externe de la carcasse, et un assemblage de nappes de sommet (20) arrangé dans la couronne et sur le côté externe de la carcasse, ainsi que sur le côté interne de la bande de roulement, l'assemblage de nappes de sommet comprenant au moins une première, une deuxième et une troisième couches s'étendant en direction circonférentielle, dans lequel la première couche de nappe de sommet (24) est disposée à l'extérieur de la deuxième couche (34) en direction radiale et la deuxième couche est disposée à l'extérieur de la troisième couche (40) en direction radiale, et dans lequel une des couches de nappes de sommet englobe une portion centrale en caoutchouc entre deux portions latérales comprenant du tissu renforcé par des câblés, le bandage pneumatique étant **caractérisé par le fait que** la première couche de nappe de sommet englobe une portion centrale en caoutchouc (26) et deux portions latérales (30) comprenant du tissu renforcé par des câblés, la portion centrale et les portions latérales possédant une épaisseur uniforme.

2. Bandage pneumatique (10) selon la revendication 1, **caractérisé en outre par le fait que** la deuxième couche (34) est constituée d'un tissu renforcé par des câblés et la troisième couche de nappe de sommet (40) englobe une portion centrale en caoutchouc (44) et deux portions latérales comprenant du tissu renforcé par des câblés.

3. Bandage pneumatique (10) selon la revendication 2, **caractérisé en outre par le fait que** la portion centrale (26) de la première couche (24) et la portion centrale (44) de la troisième couche (40) possèdent une largeur essentiellement égale en direction transversale.

4. Bandage pneumatique (10) selon la revendication 2, **caractérisé en outre par le fait que** la largeur de la deuxième couche (34) en direction transversale est inférieure à la largeur de la première couche (24) en direction transversale.

5. Bandage pneumatique (10) selon la revendication 2, **caractérisé en outre par le fait que** la largeur de la portion centrale (26) de la première couche (24) en direction transversale représente entre 10 % et 50 % de la largeur de la première couche en direction transversale.

6. Bandage pneumatique (10) selon la revendication 2, dans lequel les portions centrales des première et troisième couches possèdent une largeur essentiellement égale en direction transversale.

7. Bandage pneumatique selon la revendication 2, **caractérisé par** une quatrième couche circonférentielle (52) s'étendant en direction radiale à l'intérieur de la troisième couche (40) et comprenant un tissu renforcé par des câblés.

8. Bandage pneumatique (10) pour des roues de véhicules possédant une paire de talons, une carcasse (18) s'étendant d'un talon à l'autre en passant par une couronne, une bande de roulement (14) recouvrant le côté externe de la carcasse, et un assemblage de nappes de sommet (20A) arrangé dans la couronne et sur le côté externe de la carcasse, ainsi que sur le côté interne de la bande de roulement, l'assemblage de nappes de sommet comprenant au moins une première, une deuxième et une troisième couches s'étendant en direction circonférentielle, dans lequel la première couche de nappe de sommet (56) est disposée à l'extérieur de la deuxième couche en direction radiale et la deuxième couche (60) est disposée à l'extérieur de la troisième couche (64) en direction radiale, le bandage pneumatique étant **caractérisé par** une première bande (72) s'étendant en direction circonférentielle, constituée d'un composé de caoutchouc et intercalée entre les première et deuxième couches de nappes de sommet, la largeur de la première bande en direction transversale représentant entre 10 % et 50 % de la largeur en direction transversale d'une desdites couches et son épaisseur représentant entre 33 % et 50 % de l'épaisseur d'une desdites couches ; par une deuxième bande (72) s'étendant en direction circonférentielle, constituée d'un composé de caoutchouc et intercalée entre les deuxième et troisième couches de nappes de sommet, la largeur de la deuxième bande en direction transversale représentant entre 10 % et 50 % de ladite largeur transversale d'une desdites couches précitées et son épaisseur représentant entre 33 % et 50 % de ladite épaisseur d'une desdites couches précitées, les première et deuxième bandes étant positionnées dans une région centrale de l'assemblage de nappes de sommet.

9. Bandage pneumatique selon la revendication 8, dans lequel les largeurs des première et deuxième bandes en direction transversale sont essentiellement égales.

10. Bandage pneumatique (10) pour des roues de véhicules possédant une paire de talons, une carcasse (18) s'étendant d'un talon à l'autre en passant par une couronne, une bande de roulement (14) recouvrant le côté externe de la carcasse, et un assemblage de nappes de sommet (20B) arrangé dans la couronne et sur le côté externe de la carcasse, ainsi que sur le côté interne de la bande de roulement, l'assemblage de nappes de sommet comprenant au moins une première, une deuxième et une troisième couches s'étendant en direction circonférentielle, dans lequel la première couche de nappe de sommet (30) est disposée à l'extérieur de la deuxième couche (84) en direction radiale et la deuxième couche est disposée à l'extérieur de la troisième couche (88) en direction radiale, le bandage pneumatique étant **caractérisé par** une première bande (92) s'étendant en direction circonférentielle, constituée d'un tissu renforcé par des câblés et intercalée entre les première et deuxième couches de nappes de sommet, la largeur de la première bande en direction transversale représentant entre 10 % et 50 % de la largeur en direction transversale d'une desdites couches et son épaisseur étant essentiellement égale à l'épaisseur d'une desdites couches ; et par une deuxième bande (92) s'étendant en direction circonférentielle, constituée d'un tissu renforcé par des câblés et intercalée entre les deuxième et troisième couches de nappes de sommet, la largeur de la deuxième bande en direction transversale représentant entre 10 % et 50 % de ladite largeur transversale d'une desdites couches précitées et son épaisseur étant essentiellement égale à ladite épaisseur d'une desdites couches précitées, les première et deuxième bandes étant positionnées dans une région centrale de l'assemblage de nappes de sommet.

11. Bandage pneumatique selon la revendication 10, dans lequel les largeurs des première et deuxième bandes en direction transversale sont essentiellement égales.
